# FASCICULE DE BREVET EUROPEEN

(11) **EP 4 074 018 B1**
(45) Date de publication et mention de la délivrance du brevet: **15.11.2023**
(21) Numéro de dépôt: 20816250.3
(22) Date de dépôt: 04.12.2020
(51) Int. Cl.: H04N 13/239, H04N 23/50, G03B 17/02, G03B 35/08

(54) **SYSTÈME VIDEO COMPORTANT DEUX CAPTEURS VIDEO MONTÉS SUR UNE BARRE**
VIDEOSYSTEM, DAS ZWEI AUF EINER STANGE MONTIERTE VIDEOSENSOREN UMFASST
VIDEO SYSTEM COMPRISING TWO VIDEO SENSORS MOUNTED ON A BAR

(30) Priorité: 09.12.2019 FR 1913932
(43) Date de publication de la demande: 19.10.2022
(73) Titulaire: Quantaflow, 14601 Honfleur (FR)
(72) Inventeur: THETIOT, Rémy, 14601 HONFLEUR (FR)
(74) Mandataire: Cabinet Le Guen Maillet
(86) Numéro de dépôt international: PCT/EP2020/084643
(87) Numéro de publication internationale: WO 2021/115956

(56) Documents cités:
- EP-A1- 2 717 581
- EP-A1- 3 054 348
- JP-A- 2006 091 177
- US-A1- 2009 135 247

## Description

### DOMAINE TECHNIQUE

La présente invention concerne un système vidéo comportant un châssis sur lequel sont montés un circuit imprimé et une barre rigide sur laquelle sont montés deux capteurs vidéo.

### ETAT DE LA TECHNIQUE ANTERIEURE

Afin de comptabiliser les personnes passant à un endroit particulier, comme par exemple un couloir ou une entrée d'un bâtiment, il est connu d'installer un système vidéo au niveau de cet endroit particulier. Afin de comptabiliser correctement les personnes, il est connu d'utiliser deux capteurs vidéo qui sont décalés l'un par rapport à l'autre afin de générer deux flux vidéo différents. Ces deux flux forment une stéréovision et ils sont ensuite traités par un calculateur qui détermine le nombre de personnes qui passent.

De tels calculateurs utilisent des logiciels connus tels que des logiciels de type « census ».

Un système vidéo de l'état de la technique comporte ainsi, classiquement un châssis qui est fixé au plafond, une barre d'aluminium qui porte un circuit imprimé sur lequel sont montés le calculateur et les deux capteurs vidéo. Du fait de son activité, le calculateur dégage une forte chaleur qui tend à chauffer le circuit imprimé et la barre d'aluminium. Du fait de cet échauffement, le circuit imprimé et la barre d'aluminium peuvent se déformer et du fait de coefficients de dilatation différents, un effet bilame peut être engendré ce qui entraîne un déplacement des axes des capteurs vidéo et des erreurs de détection des personnes.

Les documents JP-A-2006/091177, EP-A-3 054 348, US-A-2009/135247 et EP-A-2 717 581 divulguent des systèmes vidéo de l'état de la technique.

### EXPOSE DE L'INVENTION

Un objet de la présente invention est de proposer un système vidéo comportant un châssis sur lequel sont montés un circuit imprimé et une barre rigide sur laquelle sont montés deux capteurs vidéo et où une déformation thermique du circuit imprimé ne peut engendrer un désaxement des capteurs vidéo.

A cet effet, est proposé un système vidéo comportant :
- un châssis destiné à se fixer au plafond,
- un cache fixé au châssis et présentant deux fenêtres,
- une barre à chacune des extrémités de laquelle sont fixés une optique et un circuit imprimé additionnel, et pour chaque optique, un capteur vidéo associé à l'optique et fixé à un circuit imprimé additionnel et un connecteur fixé au circuit imprimé additionnel où chaque optique est disposée dans une fenêtre du cache,
- un circuit imprimé comportant pour chaque circuit imprimé additionnel, un connecteur, où le circuit imprimé est fixé au châssis, où la barre est en appui sur le circuit imprimé et
- pour chaque circuit imprimé additionnel, une nappe électrique connectée entre le connecteur du circuit imprimé additionnel et le connecteur correspondant du circuit imprimé,
où la barre présente un alésage dont l'axe est parallèle aux axes de visée des capteurs vidéo, et la fixation du circuit imprimé au châssis s'effectue à l'aide d'au moins une vis centrale dont l'axe est parallèle aux axes de visée des capteurs vidéo et équidistant de ces deux axes de visée, où la vis centrale présente une extension qui s'emmanche dans l'alésage

Du fait de la dissociation du circuit imprimé et de la barre portant les capteurs vidéo, une éventuelle déformation thermique du circuit imprimé n'impactera pas les capteurs vidéo et la mise en place d'une vis présentant une extension qui s'emmanche dans l'alésage assure une fixation sans contrainte.

Avantageusement, pour chaque fenêtre, le système vidéo comporte un cache supplémentaire fixé autour de l'optique associée à ladite fenêtre, et en avant de la barre.

Avantageusement, le système vidéo comporte un système de déplacement qui déplace la barre en rotation autour de l'extension.

Avantageusement, le système de déplacement comporte un moteur fixé à la barre et comportant un arbre moteur, un engrenage fixé à l'arbre moteur, et une crémaillère solidaire du cache et qui engrène avec l'engrenage.

Avantageusement, la barre comporte à son extrémité du côté de l'engrenage, une rainure dans laquelle se place un bord du circuit imprimé.

Avantageusement, le châssis présente une paroi inférieure disposée en bas entre le circuit imprimé et le cache, et une paroi supérieure disposée en haut au-dessus de la barre, et la barre comporte un système d'appui qui est disposé au niveau de l'autre extrémité de la barre et qui est en appui contre la face intérieure de la paroi supérieure du châssis).

Avantageusement, le circuit imprimé et les circuits imprimés additionnels ne sont pas dans un même plan.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue en perspective et de dessous d'un système vidéo selon l'invention,
[Fig. 2] est une vue en perspective et de dessus du système vidéo de la Fig. 1,
[Fig. 3] est une vue en perspective et de dessous du système vidéo de la Fig. 1 sans le cache,
[Fig. 4] est une vue en perspective des capteurs vidéo,
[Fig. 5] est une vue en coupe du système vidéo selon le plan vertical V de la Fig. 1, et
[Fig. 6] est une vue en coupe du système vidéo selon le plan vertical VI de la Fig. 4.

### EXPOSE DETAILLE DE MODES DE REALISATION

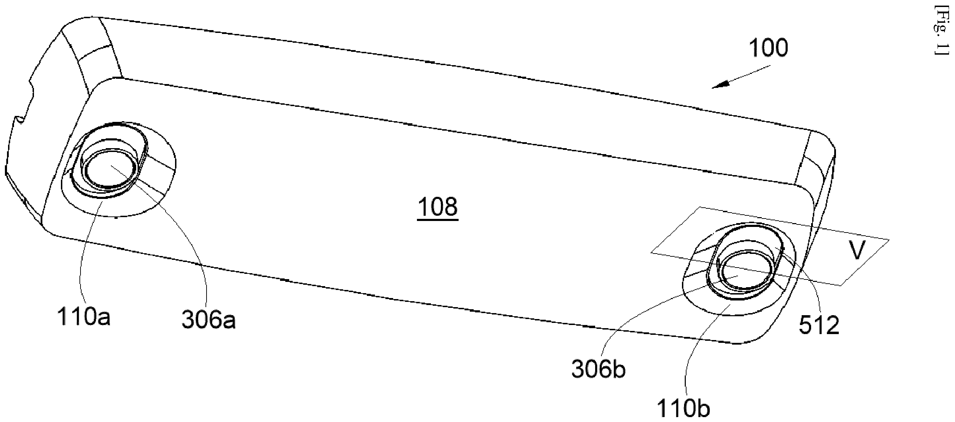

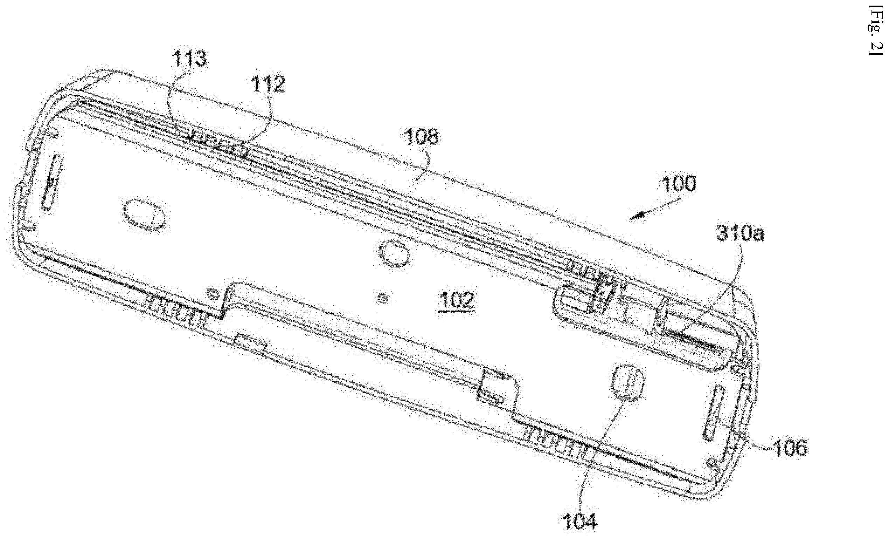

La Fig. 1 et la Fig. 2 montrent un système vidéo 100 qui comporte un châssis 102 qui se fixe à un plafond. A cette fin, le châssis 102 comporte des alésages 104 pour y placer des vis de fixation.

Selon un autre mode de réalisation non représenté, il est également possible de prévoir un support qui se fixe au plafond et qui comporte deux languettes où chacune s'insère dans une fente 106 du châssis 102 pour le fixer au plafond.

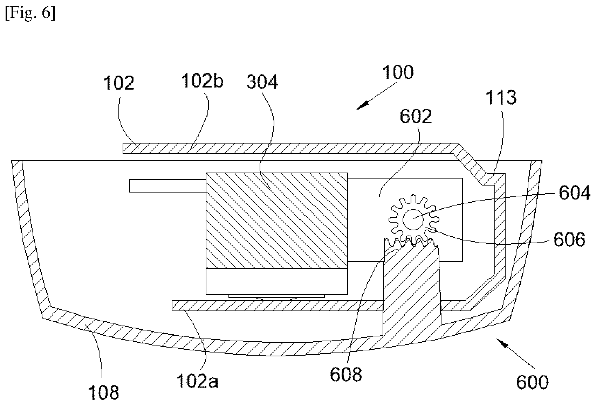

Le système vidéo 100 comporte un cache 108 qui se fixe au châssis 102 et qui présente deux fenêtres 110a-b. Dans le mode de réalisation de l'invention présenté sur la Fig. 2, la fixation du cache 108 sur le châssis 102 est réalisée par des crochets 112 du cache 108 qui enserrent un rebord 113 du châssis 102 qui est également visible sur la Fig. 6.

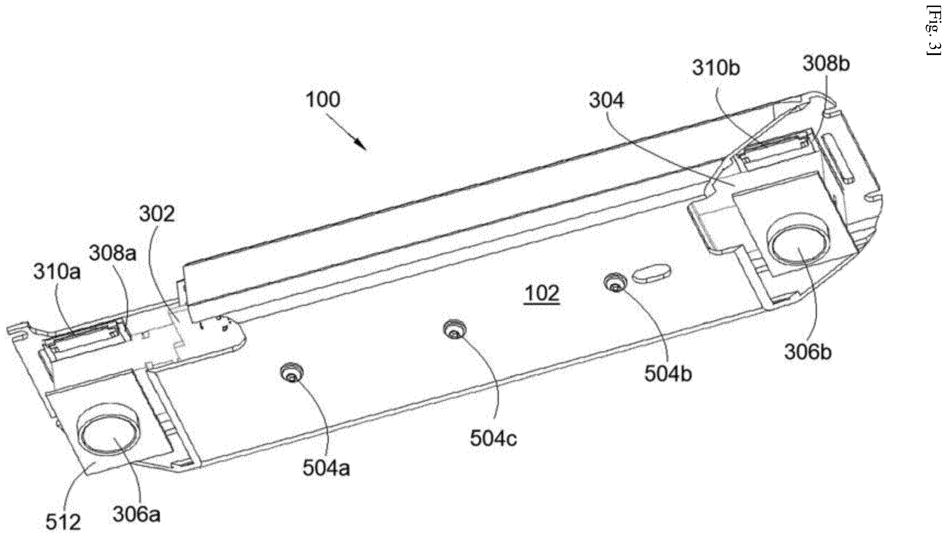

La Fig. 3 montre le système vidéo 100 sans le cache 108. Le châssis 102 prend la forme d'un profilé à section rectangulaire dans lequel sont logés un circuit imprimé 302 et une barre 304.

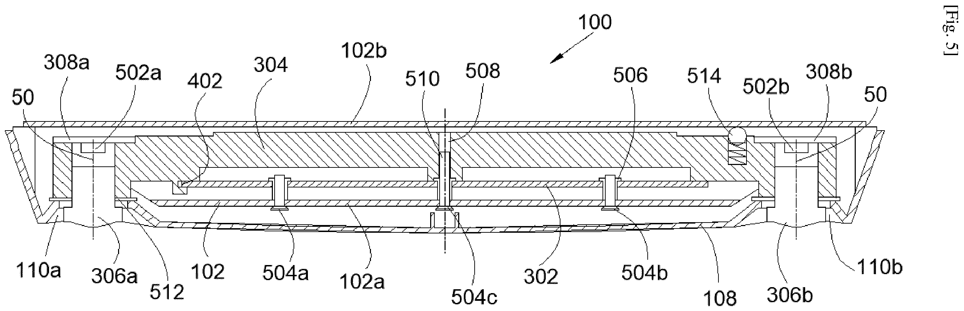

Le système vidéo 100 comporte également deux capteurs vidéo (502a-b, Fig. 5) et une optique 306a-b pour chaque capteur vidéo 502a-b. Les axes de visée 50 de deux capteurs vidéo 502a-b sont parallèles et orientés vers le bas à travers l'optique 306a-b associée, c'est-à-dire verticalement.

Le châssis 102 présente une paroi inférieure 102a disposée en bas entre le circuit imprimé 302 et le cache 108, et une paroi supérieure 102b disposée en haut au-dessus de la barre 304. Ici, c'est la paroi supérieure 102b qui présente les alésages 104 et les fentes 106.

La barre 304 est rigide et est réalisée par exemple en aluminium.

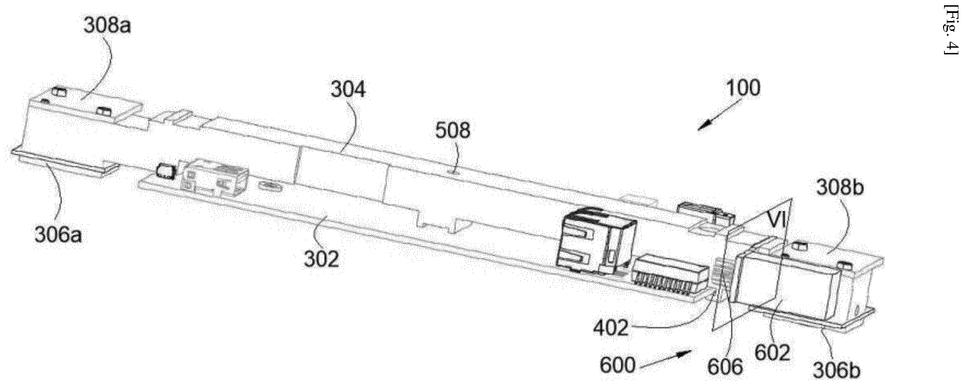

La Fig. 4 montre le circuit imprimé 302 et la barre 304. La Fig. 5 montre le système vidéo 100 en coupe par un plan vertical passant par les deux axes de visée 50.

A chacune des extrémités de la barre 304 sont fixés une optique 306a-b et un circuit imprimé additionnel 308a-b, et pour chaque optique 306a-b, un capteur vidéo 502a-b associé à l'optique 306a-b est fixé à un circuit imprimé additionnel 308a-b. Chaque circuit imprimé additionnel 308a-b porte un connecteur 310a-b fixé au circuit imprimé additionnel 308a-b. Chaque connecteur 310a-b est électriquement connecté au capteur vidéo 502a-b porté par le circuit imprimé additionnel 308a-b considéré à travers des pistes du circuit imprimé additionnel 308a-b.

Chaque optique 306a-b se positionne dans une des fenêtres 110a-b du cache 108.

Chaque circuit imprimé additionnel 308a-b est fixé à la barre 304 par exemple par des vis de fixation. Classiquement, chaque capteur vidéo 502a-b est aligné avec son optique 306a-b.

Pour chaque circuit imprimé additionnel 308a-b, le système vidéo 100 comporte une nappe électrique (non représentée) électriquement connectée au connecteur 310a-b du circuit imprimé additionnel 308a-b.

Pour chaque circuit imprimé additionnel 308a-b, le circuit imprimé 302 porte un connecteur pour la connexion de ladite nappe électrique et chaque nappe électrique est ainsi électriquement connectée entre un connecteur 310a-b d'un circuit imprimé additionnel 308a-b et un connecteur du circuit imprimé 302.

Le circuit imprimé 302 porte entre autres un calculateur nécessaire au fonctionnement du système vidéo 100 et en particulier nécessaire aux traitements des flux vidéo transmis par les capteurs vidéo 502a-b à travers les nappes électriques qui sont électriquement connectées au calculateur à travers des pistes du circuit imprimé 302. Le calculateur est agencé pour compter les personnes qui passent devant le système vidéo 100 à partir des flux vidéo transmis par les capteurs vidéo 502a-b. Les procédés mis en oeuvre par le calculateur pour analyser les flux vidéo et comptabiliser les personnes ne sont pas décrits ici, car ils ne font pas partie de l'invention.

La barre 304 n'est pas fixée de manière rigide au châssis 102, elle est uniquement en appui sur le circuit imprimé 302 qui est fixé au châssis 102. Il n'y a pas de fixation rigide entre la barre 304 et le circuit imprimé 302.

Comme le montre la Fig. 5, le circuit imprimé 302 n'est pas fixé de manière rigide à la barre 304, mais il est fixé au châssis 102 ici par trois vis 504a-c et trois écrous 506 servant également d'entretoises et qui sont réalisés ici par des inserts soudés au circuit imprimé 302. En outre, le circuit imprimé 302 n'est pas solidaire des circuits imprimés additionnels 308a-b.

Ainsi, en cas de déformation du circuit imprimé 302 sous l'effet de la chaleur, ni la barre 304, ni les circuits imprimés additionnels 308a-b ne sont impactés car il n'y a aucune liaison rigide avec le circuit imprimé 302 et de la même manière, les capteurs vidéo 502a-b ne se désaxent pas. En outre, l'utilisation de nappes électriques évite l'apparition de tension mécanique entre le circuit imprimé 302 et les circuits imprimés additionnels 308a-b.

Dans le mode de réalisation de l'invention présenté ici, il y a une vis centrale 504c qui fixe le circuit imprimé 302 au châssis 102 et la vis centrale 504c présente son axe parallèle aux axes de visée des capteurs vidéo 502a-b et équidistant de ces deux axes de visée. Ici, l'axe de la vis centrale 504c est coplanaire avec les deux axes de visée.

La tige filetée de la vis centrale 504c présente une extension 510 qui se prolonge au-delà de l'écrou 506 et la barre 304 présente un alésage 508 dont l'axe est parallèle aux axes de visée et dans lequel s'emmanche l'extension 510. Le jeu entre le diamètre de l'extension 510 et le diamètre de l'alésage 508 est suffisamment important pour que la pénétration de l'extension 510 dans l'alésage 508 s'effectue sans force et est suffisamment faible pour que la barre 304 ne se déplace pas en translation. Le jeu est par exemple du type jeu faible à jeu moyen et est par exemple de l'ordre de 0,3 mm.

La barre 304 est ainsi maintenue verticalement en appui sur le cache 108 et horizontalement par l'extension 510 et elle est libre de tourner autour de l'extension 510.

Un tel arrangement rotatif permet d'adapter la position des capteurs vidéo 502a-b et des optiques 306a-b en fonction de l'environnement, en particulier lorsque le sol présente des motifs répétables et parallèles à la barre 304, et ainsi de désaxer les capteurs vidéo 502a-b et les optiques 306a-b par rapport à ces motifs répétables pour une meilleure détection des personnes.

Pour chaque fenêtre 110a-b, le système vidéo 100 comporte un cache supplémentaire 512 fixé autour de l'optique 306a-b associée à ladite fenêtre 110a-b. Chaque cache supplémentaire 512 prend ici la forme d'une plaque rectangulaire qui se positionne en avant de la barre 304 pour la cacher.

La Fig. 6 montre une coupe du système vidéo 100. Afin de régler la position de la barre 304 et donc des capteurs vidéo 502a-b et des optiques 306a-b qu'elle porte, le système vidéo 100 comporte un système de déplacement 600 qui déplace la barre 304 en rotation autour de l'extension 510. Le système de déplacement 600 est commandé par exemple à distance par un technicien réalisant l'installation du système vidéo 100.

Après avoir déplacé la barre 304, le système de déplacement 600 maintient la barre 304 en position.

Le système de déplacement 600 est disposé au voisinage d'une extrémité de la barre 304 et dans le mode de réalisation de l'invention présenté à la Fig. 6, le système de déplacement 600 comporte un moteur 602 fixé à la barre 304, où le moteur 602 comporte un arbre moteur 604, un engrenage 606 fixé à l'arbre moteur 604, et une crémaillère 608 solidaire du cache 108 et qui engrène avec l'engrenage 606. Ainsi, selon le sens de rotation du moteur 602, la barre 304 se déplacera dans un sens ou dans l'autre du fait que le cache 108 est fixe.

Pour éviter que la barre 304 ne se soulève, lors de la rotation de l'engrenage 604, la barre 304 comporte à son extrémité qui est du côté de l'engrenage 604, une rainure 402 dans laquelle se place un bord du circuit imprimé 302, la hauteur de la rainure 402 est suffisamment grande pour éviter tous pincements du circuit imprimé 302 même en cas de déformation et est suffisamment petite pour éviter que l'engrenage 604 n'engrène plus avec la crémaillère 608 en cas de soulèvement de la barre 304.

Pour éviter un basculement de la barre 304 autour de la rainure 402, la barre 304 comporte un système d'appui 514 qui est disposé au niveau de l'autre extrémité de la barre 304, c'est-à-dire l'extrémité opposé à celle voisine de la rainure 402, et qui est en appui contre la face intérieure de la paroi supérieure 102b du châssis 102, c'est-à-dire la face orientée vers la paroi inférieure 102a.

Le système d'appui 514 prend ici la forme d'une bille sur ressort fixée dans un alésage de la barre 304.

Dans le mode de réalisation de l'invention présenté ici, le circuit imprimé 302 et les circuits imprimés additionnels 308a-b ne sont pas dans le même plan pour permettre un gain de place en hauteur par rapport à un montage dans lequel ces circuits imprimés 302, 308a-b seraient dans le même plan.

## Revendications

1. Système vidéo (100) comportant :
- un châssis (102) destiné à se fixer au plafond,
- un cache (108) fixé au châssis (102) et présentant deux fenêtres (1 10a-b),
- une barre (304) à chacune des extrémités de laquelle sont fixés une optique (306a-b) et un circuit imprimé additionnel (308a-b), et pour chaque optique (306a-b), un capteur vidéo (502a-b) associé à l'optique (306a-b) et fixé à un circuit imprimé additionnel (308a-b) et un connecteur (310a-b) fixé au circuit imprimé additionnel (308a-b) où chaque optique (306a-b) est disposée dans une fenêtre (110a-b) du cache (108),
- un circuit imprimé (302) comportant pour chaque circuit imprimé additionnel (308a-b), un connecteur, où le circuit imprimé (302) est fixé au châssis (102), où la barre (304) est en appui sur le circuit imprimé (302) et
- pour chaque circuit imprimé additionnel (308a-b), une nappe électrique connectée entre le connecteur (310a-b) du circuit imprimé additionnel (308a-b) et le connecteur correspondant du circuit imprimé (302),
où la barre (304) présente un alésage (508) dont l'axe est parallèle aux axes de visée des capteurs vidéo (502a-b), et où la fixation du circuit imprimé (302) au châssis (102) s'effectue à l'aide d'au moins une vis centrale (504c) dont l'axe est parallèle aux axes de visée des capteurs vidéo (502a-b) et équidistant de ces deux axes de visée, où la vis centrale (504a) présente une extension (510) qui s'emmanche dans l'alésage (508).

2. Système vidéo (100) selon la revendication 1, **caractérisé en ce que** pour chaque fenêtre (110a-b), le système vidéo (100) comporte un cache supplémentaire (512) fixé autour de l'optique (306a-b) associée à ladite fenêtre (110a-b), et en avant de la barre (304).

3. Système vidéo (100) selon l'une des revendications 1 ou 2, **caractérisé en ce qu'**il comporte un système de déplacement (600) qui déplace la barre (304) en rotation autour de l'extension (510).

4. Système vidéo (100) selon la revendication 3, **caractérisé en ce que** le système de déplacement (600) comporte un moteur (602) fixé à la barre (304) et comportant un arbre moteur (604), un engrenage (606) fixé à l'arbre moteur (604), et une crémaillère (608) solidaire du cache (108) et qui engrène avec l'engrenage (606).

5. Système vidéo (100) selon la revendication 4, **caractérisé en ce que** la barre (304) comporte à son extrémité du côté de l'engrenage (604), une rainure (402) dans laquelle se place un bord du circuit imprimé (302).

6. Système vidéo (100) selon la revendication 5, **caractérisé en ce que** le châssis (102) présente une paroi inférieure (102a) disposée en bas entre le circuit imprimé (302) et le cache (108), et une paroi supérieure (102b) disposée en haut au-dessus de la barre (304), et **en ce que** la barre (304) comporte un système d'appui (514) qui est disposé au niveau de l'autre extrémité de la barre (304) et qui est en appui contre la face intérieure de la paroi supérieure (102b) du châssis (102).

7. Système vidéo (100) selon l'une des revendications 1 à 6, **caractérisé en ce que** le circuit imprimé (302) et les circuits imprimés additionnels (308a-b) ne sont pas dans un même plan.

## Patentansprüche

1. Videosystem (100) aufweisend:
- einen Grundträger (102) zur Befestigung an der Decke,
- eine Abdeckung (108), die am Grundträger (102) befestigt ist und zwei Fenster (110a-b) aufweist,
- eine Leiste (304), wobei an jeder von deren Enden eine Optik (306a-b) und eine zusätzliche Leiterplatte (308a-b) befestigt sind, und für jede Optik (306a-b) einen Videosensor (502a-b), der der Optik (306a-b) zugeordnet ist und an einer zusätzlichen Leiterplatte (308a-b) befestigt ist, und einen Konnektor (310a-b), der an der zusätzlichen Leiterplatte (308a-b) befestigt ist, wobei jede Optik (306a-b) in einem Fenster (110a-b) der Abdeckung (108) angeordnet ist,
- eine Leiterplatte (302), die für jede zusätzliche Leiterplatte (308a-b) einen Konnektor aufweist, wobei die Leiterplatte (302) am Grundträger (102) befestigt ist, wobei die Leiste (304) auf der Leiterplatte (302) aufliegt, und
- für jede zusätzliche Leiterplatte (308a-b) ein Flachbandkabel, das zwischen dem Konnektor (310a-b) der zusätzlichen Leiterplatte (308a-b) und dem entsprechenden Konnektor der Leiterplatte (302) angeschlossen ist,
wobei die Leiste (304) eine Bohrung (508) aufweist, deren Achse parallel zu den Visierachsen der Videosensoren (502a-b) verläuft und die Befestigung der Leiterplatte (302) am Grundträger (102) mithilfe wenigstens einer Mittelschraube (504c) erfolgt, deren Achse parallel zu den Visierachsen der Videosensoren (502a-b) verläuft und sich in gleichem Abstand zu diesen zwei Visierachsen befindet, wobei die Mittelschraube (504a) eine Verlängerung (510) aufweist, die in der Bohrung (508) steckt.

2. Videosystem (100) nach Anspruch 1, **dadurch gekennzeichnet, dass** für jedes Fenster (110a-b) das Videosystem (100) eine zusätzliche Abdeckung (512) aufweist, die um die Optik (306a-b) herum, die dem Fenster (110a-b) zugeordnet ist, und vor der Leiste (304) befestigt ist.

3. Videosystem (100) nach einem der Ansprüche 1 oder 2, **dadurch gekennzeichnet, dass** es ein Bewegungssystem (600) aufweist, das die Leiste (304) um die Verlängerung (510) drehend bewegt.

4. Videosystem (100) nach Anspruch 3, **dadurch gekennzeichnet, dass** das Bewegungssystem (600) einen Motor (602) aufweist, der an der Leiste (304) befestigt ist und eine Motorwelle (604), eine Verzahnung (606), die an der Motorwelle (604) befestigt ist, und eine Zahnstange (608) aufweist, die mit der Abdeckung (108) fest verbunden ist und mit der Verzahnung (606) in Eingriff steht.

5. Videosystem (100) nach Anspruch 4, **dadurch gekennzeichnet, dass** die Leiste (304) an ihrem Ende auf der Seite der Verzahnung (604) eine Rille (402) aufweist, in der ein Rand der Leiterplatte (302) platziert ist.

6. Videosystem (100) nach Anspruch 5, **dadurch gekennzeichnet, dass** der Grundträger (102) eine untere Wand (102a), die unten zwischen der Leiterplatte (302) und der Abdeckung (108) angeordnet ist, und eine obere Wand (102b) aufweist, die oben oberhalb der Leiste (304) angeordnet ist, und dadurch, dass die Leiste (304) ein Anlagesystem (514) aufweist, das im Bereich des anderen Endes der Leiste (304) angeordnet ist und an der Innenseite der oberen Wand (102b) des Grundträgers (102) anliegt.

7. Videosystem (100) nach einem der Ansprüche 1 bis 6, **dadurch gekennzeichnet, dass** die Leiterplatte (302) und die zusätzlichen Leiterplatten (308a-b) nicht in ein und derselben Ebene liegen.

## Claims

1. Video system (100) comprising:
- a frame (102) intended to be fixed to the ceiling,
- a cover (108) fixed to the frame (102) and having two windows (110a-b),
- a bar (304) at each of the ends of which are fixed an optic (306a-b) and an additional printed circuit (308a-b), and, for each optic (306a-b), a video sensor (502a-b) associated with the optic (306a-b) and fixed to an additional printed circuit (308a-b) and a connector (310a-b) fixed to the additional printed circuit (308a-b) in which each optic (306a-b) is disposed in a window (110a-b) of the cover (108),
- a printed circuit (302) comprising, for each additional printed circuit (308a-b), a connector, in which the printed circuit (302) is fixed to the frame (102), and in which the bar (304) is bearing on the printed circuit (302) and
- for each additional printed circuit (308a-b), an electric ribbon cable connected between the connector (310a-b) of the additional printed circuit (308a-b) and the corresponding connector of the printed circuit (302),
- in which the bar (304) has a bore (508), the axis of which is parallel to the visual axes of the video sensors (502a-b), and in which the fixing of the printed circuit (302) to the frame (102) is performed using at least one central screw (504c), the axis of which is parallel to the visual axes of the video sensors (502a-b) and equidistant from these two visual axes, in which the central screw (504a) has an extension (510) which is fitted into the bore (508).

2. Video system (100) according to Claim 1, **characterized in that**, for each window (110a-b), the video system (100) comprises an additional cover (512) fixed around the optic (306a-b) associated with said window (110a-b), and in front of the bar (304).

3. Video system (100) according to one of Claims 1 and 2, **characterized in that** it comprises a displacement system (600) which displaces the bar (304) in rotation about the extension (510).

4. Video system (100) according to Claim 3, **characterized in that** the displacement system (600) comprises a motor (602) fixed to the bar (304) and comprising a motor shaft (604), a gear (606) fixed to the motor shaft (604), and a rack (608) secured to the cover (108) which meshes with the gear (606).

5. Video system (100) according to Claim 4, **characterized in that** the bar (304) comprises, at its end on the side of the gear (604), a groove (402) in which an edge of the printed circuit (302) is placed.

6. Video system (100) according to Claim 5, **characterized in that** the frame (102) has a bottom wall (102a) disposed in the bottom between the printed circuit (302) and the cover (108), and a top wall (102b) disposed at the top above the bar (304), and **in that** the bar (304) comprises a bearing system (514) which is disposed at the other end of the bar (304) and which bears against the inner face of the top wall (102b) of the frame (102).

7. Video system (100) according to one of Claims 1 to 6, **characterized in that** the printed circuit (302) and the additional printed circuits (308a-b) are not in a same plane.
